# EUROPEAN PATENT SPECIFICATION

(11) **EP 1 018 538 B1**
(45) Date of publication and mention of the grant of the patent: **22.03.2017**
(21) Application number: 98924642.6
(22) Date of filing: 16.06.1998
(51) Int. Cl.: C10M 101/02, C10M 107/02, C10M 105/06, C10M 171/00, C10M 169/04, C10M 137/04, C10N 40/30

(54) **REFRIGERATOR FLUID COMPOSITION**
FLÜSSIGKEITZUSAMMENSETZUNG FÜR KÜHLSCHRANK
COMPOSITION DE FLUIDE POUR REFRIGERATEUR

(30) Priority: 17.06.1997 JP 17656497
(43) Date of publication of application: 12.07.2000
(73) Proprietor: Nippon Mitsubishi Oil Corporation, Tokyo (JP)
(72) Inventor: TAKIGAWA, Katsuya, Nippon Oil Co., Ltd, Yokohama-shi, Kanagawa 213-0815 (JP); SHIMOMURA, Yuji, Nippon Oil Co., Ltd, Yokohama-shi, Kanagawa 213-0815 (JP); HASEGAWA, Hiroyasu, Nippon Oil Co., Ltd, Yokohama-shi, Kanagawa 213-0815 (JP)
(74) Representative: Modiano, Micaela Nadia
(86) International application number: PCT/JP1998/002647
(87) International publication number: WO 1998/058042

(56) References cited:
- EP-A- 0 557 796
- EP-A- 0 717 098
- WO-A-94/26835
- JP-A- 7 173 461
- JP-A- 8 176 536
- JP-A- 9 059 609
- JP-A- 9 143 486
- JP-A- 9 316 439

## Description

### Technical Field

This invention relates to a fluid composition for use in a refrigerating machine. More particularly this invention relates to a composition which comprises a hydrocarbon oil and which is useful for a refrigerant containing a hydrocarbon, and to a fluid composition for a refrigerating machine, which comprises said refrigerating machine oil composition.

### Background Art

Due to the recent problems as to the destruction of the ozone layer, the use of CFC (chlorofluorocarbon) and HCFC (hydrochlorofluorocarbon) which have been conventionally used as a refrigerant for a refrigerator is now restricted under a regulation. Therefore, as a replacement of these materials, HFC (hydrofluorocarbon) has been increasingly employed as a refrigerant.

Under the circumstances, PAG (polyalkylene glycol) and esters which are compatible with HFC have been studied or used as an oil for a refrigerator using an HFC refrigerant. For example, the use of PAG is proposed in U.S.Patent 4,755.316; Japanese Patent Unexamined Publications Nos. Hei 1-198694, Hei 1-256594, Hei 1-259093, Hei 1-259094, Hei 1-259095, Hei 1-274191, Hei 2-43290, Hei 2-55791 and Hei 2-84491. The use of esters is proposed in PCT.Publication No. Hei 3-505602 as well as in Japanese Patent Unexamined Publications Nos. Hei 3-88892, Hei 2-128991, Hei 3-128992, Hei 3-200895, Hei 3-227397, Hei 4-20597, Hei 4-72390, Hei 4-218592 and Hei 4-249593.

However, PAG is rather high in hygroscopicity and poor in electric characteristics (volume resistivity). On the other hand, ester-based oils are readily hydrolyzed to generate an acid thus possibly giving rise to various problems. Moreover, these oils are accompanied with a serious problem that they are inferior in lubricity as compared with a mineral oil/CFC or a mineral oil/HCFC.

On the other hand, Japanese Patent Unexamined Publication No. Hei 5-157379 describes a refrigerating system for an HFC-134a refrigerant wherein there is used a refrigerating machine oil which is incompatible with a refrigerant; as an example of such an incompatible oil, an alkylbenzene oil is disclosed therein. However, if an ordinary alkylbenzene oil is to be used as a refrigerating machine oil for HFC-134a, some specific means is required to be taken on the side of the refrigerating system.
WO 94 26835 discloses a cooling device equipped with a system equipped with a compressor, a damper and connecting pipes and this system is filled with a cooling medium, which cooling medium is composed of a mixture of a cooling agent for purposes of cooling, a mineral lubricating oil, and one or more hydrocarbons.
EP-A-0 717 098 discloses a fluid composition for use in refrigerating machine which comprises a hydrofluorocarbon refrigerant and at least one hydrocarbon compound.
JP 8-176536 discloses a refrigerant consisting of a hydrocarbon which contains an unsaturated hydrocarbon.
JP 7-173461 discloses a, refrigerant that is mixture of a refrigerant containing at least perfluoropropane and no chlorine, and 0.1-15 % by weight of propane and/or n-pentane.
JP 9-059609 discloses a mixed working fluid comprising: 10-95 % by weight of trifluoroiodemethane; at least one of 5-70 % by weight of propane and no greater than 75 % by weight of isobutene; and a lubricating oil that is not ester oil.
JP 9-143486 discloses a refrigerating machine oil composition comprising as a base oil: 5-30 parts by weight of at least one non-polyolester oil selected from the group consisting of naphthene-based mineral oils, parafin-based mineral oils, poly-alpha-olefins, and alkylbenzens; and 5-30 parts by weight of a polyolester.
JP 6-184576 discloses a refrigerating machine oil composition comprising as a base oil which is a naphthene-based mineral oil, parafin-based mineral oil, an alkylbenzen oil, poly-alpha-olefin oil or a mixture thereof, wherein the composition has a viscosity at 40 degree Celsius of 2-15 cSt and a viscosity at 100 degree Celsius of 1-4 cSt.
EP-A-0 699 742 discloses a refrigerator oil for use with an HFC refrigerant containing HFC-134a and/or HFC-125, which comprises: (A) 70 to 99% by weight of an alkylbenzene oil containing at least 60% by weight (based on the total weight of the component (A)) of alkylbenzenes having a molecular weight of 200 to 350 and (B) 30 to 1% by weight of a synthetic oil containing oxygen. There is also disclosed a refrigerator fluid composition comprising the above-mentioned refrigerator oil and an HFC refrigerant containing HFC-134a and/or HFC-125, together with or without an additive such as a phosuphorus compound.
EP-0959121 discloses a composition for use in compression refrigeration comprising (A) a refrigerant containing a C1-C8 hydrocarbon as the principal ingredient, and (B) a lubrication base oil primarily formed of a hydrocarbon compound whose non-aromatic-group unsaturation degree is not more than 10% and whose kinematic viscosity is not less than 5 mm²/s or (C) a lubrication base oil whose primary component is a specified polyalkylene glycol derivative having a kinematic viscosity of 5-200 mm²/s at 100°C.

It is an object of this invention to provide a refrigerating machine oil composition which can be used with a refrigerant containing a hydrocarbon, and which has excellent lubricity and compatibility with refrigerants, and provide a fluid composition for a refrigerating machine, which comprises the refrigerating machine oil composition and the refrigerant containing the hydrocarbon.

The inventors of this invention, after making an extensive study, have found out that there can be obtained a refrigerating machine oil composition which has excellent various properties when a hydrocarbon oil which is free from hydrolysis and hygroscopicity is used as a base oil, and further found out that when a refrigerant containing a hydrocarbon is used with said refrigerating machine oil composition, there can be obtained a fluid composition which has excellent various properties. This invention has thus'been accomplished.

Namely, this invention provides a fluid composition for use in a refrigerating machine, which comprises:
(I) a refrigerant consisting of a hydrocarbon having 1 to 6 carbon atoms; and
(II) a refrigerating machine oil composition which comprises a base oil comprising a hydrocarbon oil selected from the group consisting of olefin polymers, naphthalene compounds and alkylbenzene oils having a kinematic viscosity at 40°C of 4 to 50 mm²/s and a kinematic viscosity at 100°C of 2 to 10 mm²/s, wherein said alkylbenzene oils contain at least 60 mass% of alkylbenzene components having a molecular weight of 200 to 350 and contain 40 mass% or less of alkylbenzene components having a molecular weight of less than 200 or more than 350,
wherein said refrigerant (I) and said hydrocarbon refrigerating machine oil composition (II) are mixed in the ratio of 1 to 500 parts by weight of the composition (II) per 100 parts by weight of the refrigerant (I).

This disclosure further describes a fluid composition for use in a refrigerating machine, which comprises (I) a refrigerant containing a hydrocarbon; and (II) a hydrocarbon refrigerating machine oil composition.
Fig. 1 is a cross-sectional view of an abrasion tester in an atmosphere of a refrigerant.
Fig. 2 is a magnified view of test pieces.
Fig. 3 is a magnified view of a vane.

In these figures, the numeral 1 represents a pressure vessel; 2, a rotating shaft; 3, a fixed shaft (load); 4, atmosphere of a refrigerating machine oil composition and a refrigerant; 5, test pieces; 6, a heater; 7, a vacuum line; 8, vanes; 9, a disk and 10, 4R.

This invention will now be further explained in more detail.

In the fluid composition for use in a refrigerating machine of the present invention, the hydrocarbon refrigerating machine oil composition (II) further optionally comprises a synthetic oil containing oxygen in the ratio of 50 parts by weight or less per 100 parts by weight of said hydrocarbon oil.

In the fluid composition for use in a refrigerating machine of the present invention, the hydrocarbon refrigerating machine oil composition optionally further comprises a phosphorus compound.

Examples of the olefin polymers are those obtained from polymerization of an olefin having 2 to 12 carbon atoms, and the products obtained from hydrogenation thereof. More specifically, the olefin polymers include polybutene, polyisobutene, the oligomer of α-olefin (poly-α-olefin) having 5 to 12 carbon atoms, ethylene-propylene copolymer, and the products obtained from hydrogenation of them.

The olefin polymers can be manufactured by any one selected from suitable conventional methods. For example, a poly-α-olefin can be produced by means of the conventional polymerization processes such as a Ziegler catalysis process, a radical polymerization process, an aluminum chloride process and a boron fluoride process wherein an α-olefin produced from ethylene is used as a raw material.

Regarding the naphthalene compounds, there is no specific limitation as far as they have naphthalene frame, but since a compound represented by the following general formula has excellent compatibility with a refrigerant containing a hydrocarbon, it may be preferably used. 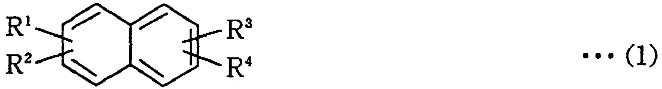
wherein R¹, R², R³ and R⁴ may be identical with or different from each other and are each a hydrogen atom or a hydrocarbon group having 1 to 10 carbon atoms with the proviso that the total number of carbon atoms of R¹, R², R³ and R⁴ is within a range of 1 to 10.

R¹, R², R³ and R⁴ in the general formula (1) may be the same or different and are each a hydrogen atom or a hydrocarbon group having 1 to 10, preferably 1 to 8, carbon atoms. The hydrocarbon group may be selected for example from an alkyl group, alkenyl group, aryl group, alkyl aryl group or aralkyl group.

Preferable hydrocarbon groups represented by R¹, R², R³ and R⁴ in the general formula (1) include:
an alkyl group having 1 to 8 carbon atoms, such as methyl, ethyl, n-propyl, isopropyl, butyl of straight chain or branched chain type, pentyl of straight chain or branched chain type, hexyl of straight chain or branched chain type, heptyl of straight chain or branched chain type and octyl of straight chain or branched chain type;
an alkenyl group having 2 to 8 carbon atoms, such as ethenyl (vinyl), 1-propenyl, 2-propenyl (allyl), 1-methylethenyl (isopropenyl), butenyl of straight chain or branched chain type, pentenyl of straight chain or branched chain type, hexenyl of straight chain or branched chain type, heptenyl of straight chain or branched chain type and octenyl of straight chain or branched chain type;
an aryl or alkyl aryl group having 6 to 8 carbon atoms, such as phenyl, tolyl, xylyl, ethylphenyl and vinylphenyl: and
an aralkyl group having 7 to 8 carbon atoms, such as benzyl, 1-phenylethyl and 2-phenylethyl (phenethyl).

Among these hydrocarbon groups, an alkyl group having 1 to 8 carbon atoms and an alkenyl group having 2 to 8 carbon atoms are particularly preferable. Among these preferable groups, branched chain type thereof is the most preferable.

A total number of carbon atoms of R¹, R², R³ and R⁴ in the general formula (1) should be in the range of 1 to 10, preferably 1 to 8. If the total number of carbon atoms is within this range, then R¹, R², R³ and R⁴ may be the same or different. Namely, all of R¹, R², R³ and R⁴ may be a hydrocarbon group, or at least one R¹, R², R³ and R⁴ may be a hydrocarbon group while the rest thereof may be a hydrogen atom. In view of the compatibility of the hydrocarbon compound with a refrigerant, it is preferable that 1 to 3 of R¹, R², R³ and R⁴ are a hydrocarbon group while the rest thereof are a hydrogen atom and that the total number of carbon atoms of R¹ - R⁴ is within a range of 3 to 8.

When two out of R¹, R², R³ and R⁴ are a hydrocarbon group, the combination of R¹, R², R³ and R⁴ may be arbitrarily selected. A couple of hydrocarbon groups may be attached to the same condensed ring (a benzene ring) as in the case where R¹ and R² are respectively hydrocarbon groups. Alternatively, a single hydrocarbon group may be attached to each of different condensed rings (benzene rings) as in the case where R¹ and R³ are respectively hydrocarbon groups.

Preferable naphthalene compounds represented by the general formula (1) include (n-propyl) naphthalene, isopropylnaphthalene, (n-butyl) naphthalene, isobutylnaphthalene, (sec-butyl) naphthalene, (tert-butyl) naphthalene, (sec-pentyl) naphthalene, (1-ethylpropyl) naphthalene, (tert-pentyl) naphthalene, (1-methylpentyl) naphthalene, (1-ethylbutyl) naphthalene, (1,1-dimethylbutyl) naphthalene, (1-ethyl-1-methylpropyl) naphthalene, (1-methylhexyl) naphthalene, (1-ethylpentyl) naphthalene, (1-propylbutyl) naphthalene, (1,1-dimethylpentyl) naphthalene, (1-ethyl-1-methylbutyl) naphthalene, (1,1-diethylpropyl) naphthalene, (1-methylheptyl) naphthalene, (1-ethylhexyl) naphthalene, (1-propylpentyl) naphthalene, (1,1-dimethylhexyl) naphthalene, (1-ethyl-1-methylpentyl) naphthalene, (1-methyl-1-propylbutyl) naphthalene, (1,1-diethylbutyl) naphthalene, ethylmethylnaphthalene, diethyl naphthalene, methyl (n-propyl) naphthalene, methyl isopropylnaphthalene, di(n-propyl) naphthalene, diisopropylnaphthalene, (n-butyl) methylnaphthalene, isobutylmethylnaphthalene, (sec-butyl) methyl naphthalene, (tert-butyl) methylnaphthalene, di(n-butyl) naphthalene, diisobutylnaphthalene, di(sec-butyl) naphthalene, di(tert-butyl) naphthalene, trimethylnaphthalene, triethylnaphthalene, ethyl dimethylnaphthalene, diethylmethylnaphthalene, dimethyl (n-propyl) naphthalene, dimethylisopropyl naphthalene, methyl di(n-propyl) naphthalene, methyl diisopropylnaphthalene, (n-butyl) dimethyl naphthalene, isobutyldimethylnaphthalene, (sec-butyl) dimethylnaphthalene, (tert-butyl) dimethyl naphthalene, phenylnaphthalene, tolylnaphthalene, xylylnaphthalene, (ethylphenyl) naphthalene, (vinylphenyl) naphthalene, benzylnaphthalene, phenethylnaphthalene and (1-phenylethyl) naphthalene.

The naphthalene compounds may comprise the hydrocarbon compounds having a single structure or they may comprise a mixture of the hydrocarbon compounds having different structures as far as these different compounds are each represented by the general formula (1).

The naphthalene compounds can be manufactured by any of conventional methods. For example, they can be obtained by attaching (or addition reacting) compounds selected from the group consisting of halides of hydrocarbon having 1 to 10 carbon atoms, olefins having 2 to 10 carbon atoms and styrene and styrene-based compounds having 8 to 10 carbon atoms to (or with) naphthalene in the presence of a mineral acid such as sulfuric acid, phosphoric acid, silicotungstic acid or hydrofluoric acid; a solid acidic substance such as acid clay or activated clay; or a Friedel-Crafts catalyst which is a metal halide such as aluminum chloride or zinc chloride.

In view of little generation of seizure of a refrigerating compressor during a long period of its operation, the alkylbenzene oils is selected from those containing at least 60 mass %, preferably at least 65 mass %, more preferably at least 70 mass %, more preferably at least 80 mass %, most preferably 100 mass % of alkylbenzene components having a molecular weight of 200 to 350.

Further, in view of improving the property for preventing the generation of seizure of the refrigerating compressor during a long period of its operation, the alkylbenzene oils may desirably be selected from those further containing preferably at least 30 mass %, more preferably at least 35 mass %, most preferably at least 40 mass % of alkylbenzene components having a molecular weight of 200 to 300 with the proviso that the alkylbenzene oils meet said requirements.

As for the alkylbenzene components having a molecular weight of 200 to 350, there is no restriction with respect to the molecular structure of the alkylbenzene components as far as the molecular weight thereof falls within the range of from 200 to 350. However, in view of improving a long-term reliability of a refrigerating system, it is preferable to select an alkylbenzene oil (A) composed of alkylbenzenes having 1 to 4 alkyl groups, each group containing 1 to 19 carbon atoms and the total amount of carbon atoms in the alkyl group being 9 to 19, and more preferably to select alkylbenzenes having 1 to 4 alkyl groups, each group containing 1 to 15 carbon atoms and the total amount of carbon atoms in the alkyl group being 9 to 15.

Examples of alkyl groups containing 1 to 19 carbon atoms are methyl, ethyl, propyl (including all isomers), butyl (including all isomers), pentyl (including all isomers), hexyl (including all isomers), heptyl (including all isomers), octyl (including all isomers), nonyl (including all isomers), decyl (including all isomers), undecyl (including all isomers), dodecyl (including all isomers), tridecyl (including all isomers), tetradecyl (including all isomers), pentadecyl (including all isomers), hexadecyl (including all isomers), heptadecyl (including all isomers), octadecyl (including all isomers) and nonadecyl (including all isomers).

These alkyl groups may be straight-chain or branched-chain ones. However, in view of the viscosity and the like of the alkylbenzenes, branched-chain alkyl groups are preferable, and the branched-chain alkyl groups that are derived from oligomers of olefins such as propylene, butene and isobutylene are more preferable in view of availability.

The number of alkyl groups in the alkylbenzene oils defined in the above (A) is confined to 1 to 4. However, in view of the availability of the alkylbenzenes, it is the most preferable to select alkylbenzenes having one or two of alkyl groups, i.e., a monoalkylbenzene, a dialkylbenzene or a mixture of them.

It is also possible to employ not only the alkylbenzenes defined in the above (A) which have the same molecular structure, but also those having different molecular structures as long as there are satisfied the conditions that they.contain 1 to 4 alkyl groups, each group containing 1 to 19 carbon atoms and the total amount of carbon atoms in the alkyl group being 9 to 19.

The alkylbenzenes used in this disclosure contain or 40 mass % less preferably less than 35 mass %, or more preferably less than 30 mass %, of the alkylbenzenes having a molecular weight of less than 200 or more than 350. However, it is preferable that the molecular weight of such alkylbenzenes be confined to a range of more than 350 to 450, more preferably more than 350 to 430 in view of retaining reliability during a long period of operation of a compressor used.

With respect to the alkylbenzenes having a molecular weight ranging from more than 350 to 450, there are no restrictions imposed on the molecular structure thereof as far as the molecular weight falls within this range. However, in view of the availability of alkylbenzenes, it is preferable to select alkylbenzenes (B) having 1 to 4 alkyl groups, each group containing 1 to 40 carbon atoms and the total amount of carbon atoms in the alkyl group being 20 to 40, and more preferably to select alkylbenzenes having 1 to 4 alkyl groups, each group containing 1 to 30 carbon atoms and the total amount of carbon atoms in the alkyl group being 20 to 30.

Examples of alkyl groups containing 1 to 40 carbon atoms are methyl, ethyl, propyl (including all isomers), butyl (including all isomers), pentyl (including all isomers), hexyl (including all isomers), heptyl (including all isomers), octyl (including all isomers), nonyl (including all isomers), decyl (including all isomers), undecyl (including all isomers), dodecyl (including all isomers), tridecyl (including all isomers), tetradecyl (including all isomers), pentadecyl (including all isomers), hexadecyl (including all isomers), heptadecyl (including all isomers), octadecyl (including all isomers), nonadecyl (including all isomers), icosyl groups (including all isomers), henicosyl groups (including all isomers), docosyl groups (including all isomers), tricosyl groups (including all isomers), tetracosyl groups (including all isomers), heptacosyl groups (including all isomers), hexacosyl groups (including all isomers), heptacosyl groups (including all isomers), octacosyl groups (including all isomers), nonacosyl groups (including all isomers), triacontyl groups (including all isomers), hentriacontyl groups (including all isomers), dotriacontyl groups (including all isomers), tritriacontyl groups (including all isomers), tetratriacontyl groups (including all isomers), pentatriacontyl groups (including all isomers), hexatriacontyl groups (including all isomers), heptatriacontyl groups (including all isomers), octatriacontyl groups (including all isomers), nonatriacontyl groups (including all isomers) and tetracontyl groups (including all isomers).

These alkyl groups may be straight-chain or branched-chain ones. However, in view of the viscosity and the like of the alkylbenzenes, branched-chain alkyl groups are preferable; and branched-chain alkyl groups that are derived from an oligomer of an olefin such as propylene, butene or isobutylene are more preferable in view of their availability.

The number of alkyl groups in the alkylbenzenes defined in the above (B) is confined to 1 to 4. However, in view of the availability of the alkylbenzenes, it is the most preferable to select alkylbenzenes having one or two alkyl groups, i.e., a monoalkylbenzene, a dialkylbenzene and a mixture thereof.

It is also possible to employ not only the alkylbenzenes defined in the above (B) which have the same molecular structure, but also those having different molecular structures as long as there are satisfied the conditions that they contain 1 to 4 alkyl groups, each group containing 1 to 40 carbon atoms and the total amount of carbon atoms in the alkyl group being 20 to 40. There is no restriction placed on the manufacturing method of the alkylbenzene oil, but the alkylbenzene oil can be manufactured according to the following synthesizing methods.

The aromatic compounds which may be used as a raw material include benzene, toluene, xylene, ethylbenzene, methylethylbenzene, diethylbenzene and a mixture thereof. Alkylating agents, which may be used herein include a lower mono-olefin such as ethylene, propylene, butene or isobutylene; preferably an olefin of a straight-chain or branched-chain type having 6 to 40 carbon atoms that is obtained by the polymerization of propylene; an olefin of a straight-chain or branched-chain type having 6 to 40 carbon atoms that is obtained by the thermal decomposition of wax, heavy oils, a petroleum fraction, polyethylene, polypropylene or the like; an olefin of a straight-chain type having 9 to 40 carbon atoms that is obtained by separating n-paraffin from a petroleum fraction such as kerosine or gas oil and then catalytically transforming the n-paraffin into an olefin; and a mixture of these olefins.

An alkylating catalyst for use in the alkylation includes a conventional catalyst exemplified by a Friedel-Crafts catalyst such as aluminum chloride or zinc chloride; or an acidic catalyst such as sulfuric acid, phosphoric acid, silicotungstic acid, hydrofluoric acid or activated clay.

The alkylbenzene oil used in the described composition may be obtained by mixing separately prepared alkylbenzenes having a molecular weight ranging from 200 to 350 with alkylbenzenes having a molecular weight of less than 200 or more than 350 in a ratio as defined by this invention. However, it is advisable in practice to obtain a distillate containing at least 60 mass % of alkylbenzenes having a molecular weight ranging from 200 to 350 through distillation or chromatography from a mixture of alkylbenzenes which is manufactured according to the method explained above or is available in the market.

A refrigerating machine oil composition according to this disclosure comprises one kind of or a mixture of at least two kinds of the above mentioned hydrocarbon oil as a base oil. The kinematic viscosity of the base oil is at 40 °C 4 to 50 mm²/s, preferably 5 to 40 mm²/s, and at 100 °C 2 to 10 mm²/s.

Further, a refrigerating machine oil composition herein described comprises the above mentioned hydrocarbon oil as a base oil, but in addition to this the refrigerating machine oil composition may further comprise a synthetic oil containing oxygen. Preferable examples of this synthetic oil containing oxygen are an ester, polyglycol, ketone, polyvinyl ether, polyphenyl ether, silicone, polysiloxane and perfluoro ether. Among them, (a) ester, (b) polyglycol, (c) ketone, (d) polyvinyl ether and a mixture of them are especially preferable.

Examples of (a) esters are an aromatic ester, a dibasic ester, a polyol ester, a complex ester, a polyol carbonate and a mixture of them.

Examples of the aromatic ester are an ester between an aromatic carboxylic acid which has 1 to 6 valencies, preferably 1 to 4 valencies, more preferably 1 to 3 valencies and an aliphatic alcohol having 1 to 18 carbon atoms, preferably 1 to 12 carbon atoms. Examples of an aromatic carboxylic acid having 1 to 6 valencies are benzoic acid, phthalic acid, isophthalic acid, terephthalic acid, trimellitic acid, pyromellitic acid and a mixture thereof. Examples of aliphatic alcohols having 1 to 18 carbon atoms are straight-chain or branched-chain ones, more particularly the aliphatic alcohols include methanol, ethanol, straight-chain or branched-chain propanol, straight-chain or branched-chain butanol, straight-chain or branched-chain pentanol, straight-chain or branched-chain hexanol, straight-chain or branched-chain heptanol, straight-chain or branched-chain octanol, straight-chain or branched-chain nonanol, straight-chain or branched-chain decanol, straight-chain or branched-chain undecanol, straight-chain or branched-chain dodecanol, straight-chain or branched-chain tridecanol, straight-chain or branched-chain tetradecanol, straight-chain or branched chain pentadecanol, straight chain or branched-chain hexadecanol, straight-chain or branched chain heptadecanol, straight-chain or branched chain octadecanol and a mixture of them.

Examples of the aromatic ester are dibutyl phthalate, di(2-ethylhexyl) phthalate, dinonyl phthalate, didecyl phthalate, didodecyl phthalate, ditridecyl phthalate, tributyl trimellitate, tri(2-ethylhexyl) trimellitate, trinonyl trimellitate, tridecyl trimellitate, tridodecyl trimellitate, tritridecyl trimellitate. Further, when an aromatic carboxylic acid having at least 2 valencies is used, it can be used a simple ester made from one kind of an aliphatic alcohol or a mixed ester made from at least two kinds of aliphatic alcohols.

Examples of dibasic esters are those that can be obtained by reacting a dibasic acid having 5 to 10 carbon atoms such as glutamic acid, adipic acid, pimelic acid, suberic acid, azelaic acid or sebacic acid with a monohydric alcohol having 1 to 15 carbon atoms and an alkyl group of a straight-chain or branched-chain type, such as methanol, ethanol, propanol, butanol, pentanol, hexanol, heptanol, octanol, nonanol, decanol, undecanol, dodecanol, tridecanol, tetradecanol or pentadecanol. These esters may also be used as a mixture. More particularly, these esters include ditridecyl glutarate, di 2-ethylhexyl adipate, diisodecyl adipate, ditridecyl adipate, di 2-ethylhexyl sebacate and a mixture of them.

Examples of polyol esters are esters between a diol or a polyol having 3 to 20 hydroxyl groups and a fatty acid having 6 to 20 carbon atoms. More particularly, such diols include ethylene glycol, 1,3-propane diol, propylene glycol, 1,4-butane diol, 1,2-butane diol, 2-methyl-1,3-propane diol, 1,5-pentane diol, neopentyl glycol, 1,6-hexane diol, 2-ethyl-2-methyl-1,3-propane diol, 1,7-heptane diol, 2-methyl-2-propyl-1,3-propane diol, 2,2-diethyl-1,3-propane diol, 1,8-octane diol, 1,9-nonane diol, 1,10-decane diol, 1,11-undecan diol and 1,12-dodecan diol. Specific xamples of polyol are polyalcohols such as trimethylol ethane, trimethylol propane, trimethylol butane, di-(trimethylol propane), tri-(trimethylol propane), pentaerythritol, di-(pentaerythritol), tri-(pentaerythritol), glycerin, polyglycerin (glycerin dimer to icosamer), 1,3,5-pentane triol, sorbitol, sorbitan, sorbitol-glycerin condensate, adonitol, arabitol, xylitol and mannitol; saccharides such as xylose, arabinose, ribose, rhamnose, glucose, fructose, galactose, mannose, sorbose, cellobiose, maltose, isomaltose, trehalose, sucrose, raffinose, gentianose and melezitose, the partially etherified products of these polyalcohols and saccharides; and methylglucoside. More particularly, such fatty acids include pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, icosanoic acid, oleic acid (these fatty acids may be of a straight-chain or branched-chain type), or a neo acid where α carbon atom thereof is quaternary. More specifically, valeric acid, isopentanoic acid, caproic acid, enanthic acid, 2-methylhexanoic acid, 2-ethylpentanoic acid, caprylic acid, 2-ethylhexanoic acid, pelargonic acid, 3,5,5-trimethylhexanoic acid may be preferably employed as a fatty acid. Polyolester may contain a free hydroxyl group. Preferable examples of the polyolester are esters of a hindered alcohol such as neopentyl glycol, trimethylolethane, trimethylolpropane, trimethylolbutane, di-(trimethylol propane), tri-(trimethylol propane), pentaerythritol, di- (pentaerythritol) and tri-(pentaerythritol). Specific examples are neopentylglycol 2-ethylhexanoate, trimethylolpropane caprate, trimethylolpropane pelargonate, pentaerythritol 2-ethylhexanoate, pentaerythritol pelargonate or a mixture of them.

A complex ester is an ester obtained by reacting a fatty acid and a dibasic acid with a monohydric alcohol and a polyol. Examples of fatty acids, dibasic acids, monohydric alcohols and polyols useful in this case may be the same as exemplified above with reference to dibasic esters and polyol esters.

A polyol carbonate ester is an ester obtained by reacting carbonic acid with a monohydric alcohol and a polyol. Examples of monohydric alcohols and polyols useful in this case may be not only the same as exemplified above, but also polyglycol obtained through homopolymerization or copolymerization of a diol, and products which are obtainable by the addition reaction of polyglycol with the polyol mentioned above.

Examples of polyglycol (b) suitable in this case are polyalkylene glycols, alkyl ethers thereof and modified compounds thereof.

Examples of polyalkylene glycols are homopolymers or copolymers of an alkylene oxide such as ethylene oxide, propylene oxide or butylene oxide. When a polyalkylene glycol is formed of a copolymer of alkylene oxides different in structure from each other, there is no restriction placed on the polymerization form of oxyalkylene groups, i.e., the form may be random copolymerization or block copolymerization.

An alkyl ether of the polyalkylene glycol is a compound wherein the hydroxyl group of the polyalkylene glycol is etherified. Examples of alkyl ethers of the polyalkylene glycol are monomethyl ether, monoethyl ether, monopropyl ether, monobutyl ether, monopentyl ether, monohexyl ether, monoheptyl ether, monooctyl ether, monononyl ether, monodecyl ether, dimethyl ether, diethyl ether, dipropyl ether, dibutyl ether, dipentyl ether, dihexyl ether, diheptyl ether, dioctyl ether, dinonyl ether and didecyl ether.

Examples of the modified compounds of polyglycol are an adduct of polyol with an alkylene oxide, an alkyl ether of an adduct of polyol with an alkylene oxide, an ester of the polyalkylene glycol, an ester of a monoalkyl ether of the polyalkylene glycol, an ester of an adduct of polyol with an alkylene oxide and an ester of a partial alkyl ether of an adduct of polyol with an alkylene oxide. Examples of acids which constitute the esters may be fatty acids as exemplified in reference to polyol esters. Examples of polyol useful in this case may be the same as those exemplified in reference to polyol esters.

Examples of ketones (c) mentioned above are ones which contain in the molecule at least one group represented by the following general formula:

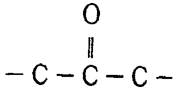

More particularly, the ketones (c) include ketone compounds represented by the following formulas (2), (3) and (4), and a mixture of these ketone compounds. 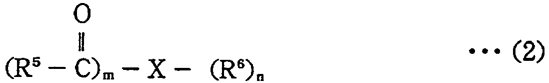 wherein X is an m+n valent aromatic ring or an alkyl-substituted aromatic ring having 6 to 50 carbon atoms, preferably 6 to 20 carbon atoms; R⁵ and R⁶ may be the same or different and are each a hydrocarbon group having 1 to 50 carbon atoms, preferably 1 to 30 carbon atoms, preferable examples thereof being an alkyl, phenyl or alkylphenyl group; m and n may be the same or different integers and are each 1 to 20, preferably 1 to 10.

Preferable examples of the aromatic ring representing X are a benzene ring, a naphthalene ring, an anthracene ring, a phenanthrene ring and an alkyl-substituted aromatic ring wherein at least one hydrogen atom on said aromatic rings is substituted by an alkyl group having 1 to 20 carbon atoms.

Preferable examples of R⁵ and R⁶ are methyl, ethyl, straight-chain or branched-chain propyl, straight-chain or branched-chain butyl, straight-chain or branched-chain pentyl, straight-chain or branched-chain hexyl, straight-chain or branched-chain heptyl, straight-chain or branched-chain octyl, straight-chain or branched-chain nonyl, straight-chain or branched-chain decyl, straight-chain or branched-chain undecyl, straight-chain or branched-chain dodecyl, straight-chain or branched-chain tridecyl, straight-chain or branched-chain tetradecyl, straight-chain or branched-chain pentadecyl, straight-chain or branched-chain hexadecyl, straight-chain or branched-chain heptadecyl, straight-chain or branched-chain octadecyl, straight-chain or branched-chain nonadecyl, straight-chain or branched-chain icosyl, straight-chain or branched-chain henicosyl, straight-chain or branched-chain docosyl, straight-chain or branched-chain tricosyl, straight-chain or branched-chain tetracosyl, straight-chain or branched-chain pentacosyl, straight-chain or branched-chain hexacosyl, straight-chain or branched-chain heptacosyl, straight-chain or branched-chain octacosyl, straight-chain or branched-chain nonacosyl, straight-chain or branched-chain triacontyl, phenyl, tolyl (including all substituted isomers), xylyl (including all substituted isomers), ethylphenyl (including all substituted isomers), straight-chain or branched-chain propylphenyl (including all substituted isomers), straight-chain or branched-chain ethylmethylphenyl (including all substituted isomers), straight-chain or branched-chain butylphenyl (including all substituted isomers), diethylphenyl (including all substituted isomers), straight-chain or branched-chain pentylphenyl (including all substituted isomers), straight-chain or branched-chain hexylphenyl (including all substituted isomers), straight-chain or branched-chain heptylphenyl (including all substituted isomers), straight-chain or branched-chain octylphenyl (including all substituted isomers), straight-chain or branched-chain nonylphenyl (including all substituted isomers), straight-chain or branched-chain decylphenyl (including all substituted isomers), straight-chain or branched-chain undecylphenyl (including all substituted isomers), straight-chain or branched-chain dodecylphenyl (including all substituted isomers), straight-chain or branched-chain tridecylphenyl (including all substituted isomers), straight-chain or branched-chain tetradecylphenyl (including all substituted isomers), straight-chain or branched-chain pentadecylphenyl (including all substituted isomers), straight-chain or branched-chain hexadecylphenyl (including all substituted isomers), straight-chain or branched-chain heptadecylphenyl (including all substituted isomers), straight-chain or branched-chain octadecylphenyl (including all substituted isomers), straight-chain or branched-chain nonadecylphenyl (including all isomers), straight-chain or branched-chain icosylphenyl (including all substituted isomers), straight-chain or branched-chain henicosylphenyl (including all substituted isomers), straight-chain or branched-chain docosylphenyl (including all substituted isomers), straight-chain or branched-chain tricosylphenyl (including all substituted isomers) and straight-chain or branched-chain tetracosylphenyl (including all substituted isomers). 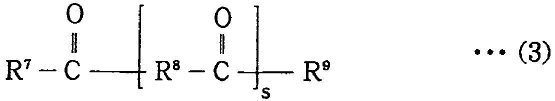 wherein R⁷ and R⁹ may be the same or different and are individually a hydrocarbon group having 1 to 50 carbon atoms, preferably 1 to 30 carbon atoms, preferably an alkyl, a phenyl or an alkylphenyl group; R⁸ is an alkylene group having 1 to 19 carbon atoms, preferably 1 to 10 carbon atoms; s is an integer of 1 to 5, preferably 1 to 3.

Preferable examples of R⁷ and R⁹ are alkyl, phenyl and alkylphenyl groups by which are exemplified R⁵ and R⁶ in the compounds represented by the general formula (2).

Further, R⁸ is preferably an alkylene group which includes methylene, straight-chain or branched-chain ethylene (including all isomers), straight-chain or branched-chain propylene (including all isomers), straight-chain or branched-chain butylene (including all isomers), straight-chain or branched-chain pentylene (including all isomers), straight-chain or branched-chain hexylene (including all isomers), straight-chain or branched-chain heptylene (including all isomers), straight-chain or branched-chain octylene (including all isomers), straight-chain or branched-chain nonylene (including all isomers) or straight-chain or branched-chain decylene group (including all isomers). 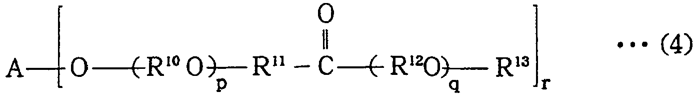 wherein A is a monohydric to icosahydric alcohol residue; R¹⁰, R¹¹ and R¹² may be the same or different and are individually an alkylene group having 1 to 4 carbon atoms; R¹³ is a hydrocarbon group, preferably an alkyl, phenyl or alkylphenyl group each having 1 to 50 carbon atoms, preferably 1 to 30 carbon atoms; p and q may be the same or different integers and are individually 0 to 30, preferably 0 to 20; and r is an integer of 1 to 20.

Alcohols for the alcohol residue A include aliphatic monohydric alcohols such as methanol, ethanol, straight-chain or branched-chain propanol (including all isomers), straight-chain or branched-chain butanol (including all isomers), straight-chain or branched-chain pentanol (including all isomers), straight-chain or branched-chain hexanol (including all isomers), straight-chain or branched-chain heptanol (including all isomers), straight-chain or branched-chain octanol (including all isomers), straight-chain or branched-chain nonanol (including all isomers), straight-chain or branched-chain decanol (including all isomers), straight-chain or branched-chain undecanol (including all isomers), straight-chain or branched-chain dodecanol (including all isomers), straight-chain or branched-chain tridecanol (including all isomers), straight-chain or branched-chain tetradecanol (including all isomers), straight-chain or branched-chain pentadecanol (including all isomers), straight-chain or branched-chain hexadecanol (including all isomers), straight-chain or branched-chain heptadecanol (including all isomers), straight-chain or branched-chain octadecanol (including all isomers), straight-chain or branched-chain nonadecanol (including all isomers), straight-chain or branched-chain icosanol (including all isomers), straight-chain or branched-chain henicosanol (including all isomers), straight-chain or branched-chain docosanol (including all isomers), straight-chain or branched-chain tricosanol (including all isomers) and straight-chain or branched-chain tetracosanol (including all isomers); diols such as ethylene glycol, 1,3-propane diol, propylene glycol, 1,4-butane diol, 1,2-butane diol, 2-methyl-1,3-propane diol, 1,5-pentane diol, neopentyl glycol, 1,6-hexane diol, 2-ethyl-2-methyl-1,3-propane diol, 1,7-heptane diol, 2-methyl-2-propyl-1,3-propane diol, 2,2-diethyl-1,3-propane diol, 1,8-octane diol, 1,9-nonane diol, 1,10-decane diol, 1,11-undecan diol and 1,12-dodecan diol; polyols including polyhydric alcohols such as trimethylol ethane, trimethylol propane, trimethylol butane, di-(trimethylol propane), tri-(trimethylol propane), pentaerythritol, di-(pentaerythritol), tri-(pentaerythritol), glycerin, polyglycerin (glycerin dimer to icosamer consisting of 2 to 20 glycerin monomers), 1,3,5-pentane triol, sorbitol, sorbitan, sorbitol-glycerin condensate, adonitol, arabitol, xylitol and mannitol, and saccharides such as xylose, arabinose, ribose, rhamnose, glucose, fructose, galactose, mannose, sorbose, cellobiose, maltose, isomaltose, trehalose, sucrose, raffinose, gentianose and melezitose, the partially etherified products of these polyalcohols and saccharides; and methylglucoside.

Preferable examples of alkylene groups representing R¹⁰, R¹¹ and R¹² are methylene, ethylene (including all isomers), propylene (including all isomers) and butylene (including all isomers).

Preferable examples of R¹³ are alkyl, phenyl and alkylphenyl groups by which are exemplified R⁵ and R⁶ in the compounds represented by the general formula (2).

Examples of polyvinyl ethers (d) mentioned above are polyvinyl ether compounds which contain a constituting unit represented by the following general formula (5): 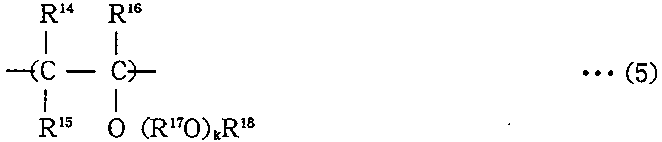 wherein R¹⁴, R¹⁵ and R¹⁶ are each a hydrogen atom or a hydrocarbon group having 1 to 8 carbon atoms and may be identical with or different from each other, R¹⁷ is a bivalent hydrocarbon group having 1 to 10 carbon atoms, R¹⁸ is a hydrocarbon group having 1 to 20 carbon atoms, k is the value whose average value is 0 to 10, R¹⁴ to R¹⁸ may be identical with or different from each other in every constituting unit, and wherein in the cases where plural R¹⁷0 are contained, R¹⁷0 may be identical with or different from each other.

R¹⁴, R¹⁵ and R¹⁶ are each a hydrogen atom or a hydrocarbon group having 1 to 8 carbon atoms, and the hydrocarbon group having 1 to 8 carbon atoms preferably includes methyl, ethyl, n-propyl, isopropyl, butyl of straight chain or branched chain type, pentyl of straight chain or branched chain type, hexyl of straight chain or branched chain type, heptyl of straight chain or branched chain type and octyl of straight chain or branched chain type. Among them, all of R¹⁴, R¹⁵ and R¹⁶ are more preferably hydrogen atoms.

Further, R¹⁷ is a bivalent hydrocarbon group having 1 to 10 carbon atoms, and it preferably includes methylene, straight-chain or branched-chain ethylene, straight-chain or branched-chain propylene, straight-chain or branched-chain butylene, straight-chain or branched-chain pentylene, straight-chain or branched-chain hexylene, straight-chain or branched-chain heptylene, straight-chain or branched-chain octylene, straight-chain or branched-chain nonylene or straight-chain or branched-chain decylene group. In the cases where plural R¹⁷O are contained in the molecule, R¹⁷O may be identical with or different from each other.

R¹⁸ is a hydrocarbon group having 1 to 20 carbon atoms, and it preferably includes a straight-chain or branched-chain alkyl group having 1 to 20 carbon atoms, a straight-chain or branched-chain alkenyl group having 2 to 20 carbon atoms, a cycloalkyl group or an alkylcycloalkyl group each having 5 to 13 carbon atoms, an aryl group or an alkyl aryl group each having 6 to 18 carbon atoms or an aryl alkyl group having 7 to 19 carbon atoms.

The alkyl group of R¹⁸ includes methyl, ethyl, n-propyl, isopropyl, n-butyl, isobutyl, sec-butyl, tert-butyl, straight-chain or branched-chain pentyl, straight-chain or branched-chain hexyl, straight-chain or branched-chain heptyl, straight-chain or branched-chain octyl, straight-chain or branched-chain nonyl, straight-chain or branched-chain decyl, straight-chain or branched-chain undecyl, straight-chain or branched-chain dodecyl, straight-chain or branched-chain tridecyl, straight-chain or branched-chain tetradecyl, straight-chain or branched-chain pentadecyl, straight-chain or branched-chain hexadecyl, straight-chain or branched-chain heptadecyl, straight-chain or branched-chain octadecyl, straight-chain or branched-chain nonadecyl, straight-chain or branched-chain icosyl.

The alkenyl group of R¹⁸ includes vinyl, propenyl, isopropenyl, straight-chain or branched-chain butenyl, butadienyl, straight-chain or branched-chain pentenyl, straight-chain or branched-chain hexenyl, straight-chain or branched-chain heptenyl, straight-chain or branched-chain octenyl, straight-chain or branched-chain nonenyl, straight-chain or branched-chain decenyl, straight-chain or branched-chain undecenyl, straight-chain or branched-chain dodecenyl, straight-chain or branched-chain tridecenyl, straight-chain or branched-chain tetradecenyl, straight-chain or branched-chain pentadecenyl, straight-chain or branched-chain hexadecenyl, straight-chain or branched-chain heptadecenyl, straight-chain or branched-chain octadecenyl such as oleyl, straight-chain or branched-chain nonadecenyl or straight-chain or branched-chain icosenyl.

The cycloalkyl group of R¹⁸ includes, cyclopentyl, cyclohexyl or cycloheptyl. The alkylcycloalkyl group includes methylcyclopentyl, dimethylcyclopentyl (including all substituted isomers), ethylcyclopentyl (including all substituted isomers), straight-chain or branched-chain propylcyclopentyl (including all substituted isomers), ethylmethylcyclopentyl (including all substituted isomers), trimethylcyclopentyl (including all substituted isomers), diethylcyclopentyl (including all substituted isomers), ethyldimethylcyclopentyl (including all substituted isomers), straight-chain or branched-chain propylmethylcyclopentyl (including all substituted isomers), straight-chain or branched-chain propylethylcyclopentyl (including all substituted isomers), di-straight-chain or branched-chain propylcyclopentyl (including all substituted isomers), straight-chain or branched-chain propylethylmethylcyclopentyl (including all substituted isomers), methylcyclohexyl (including all substituted isomers), dimethylcyclohexyl (including all substituted isomers), ethylcyclohexyl (including all substituted isomers), straight-chain or branched-chain propylcyclohexyl (including all substituted isomers), ethylmethylcyclohexyl (including all substituted isomers), trimethylcyclohexyl (including all substituted isomers), diethylcyclohexyl (including all substituted isomers), ethyldimethylcyclohexyl (including all substituted isomers), straight-chain or branched-chain propylmethylcyclohexyl (including all substituted isomers), straight-chain or branched-chain propylethylcyclohexyl (including all substituted isomers), di-straight-chain or branched-chain propylcyclohexyl (including all substituted isomers), straight-chain or branched-chain propylethylmethylcyclohexyl (including all substituted isomers), methylcycloheptyl (including all substituted isomers), dimethylcycloheptyl (including all substituted isomers), ethylcycloheptyl (including all substituted isomers), straight-chain or branched-chain propylcycloheptyl (including all substituted isomers), ethylmethylcycloheptyl (including all substituted isomers), trimethylcycloheptyl (including all substituted isomers), diethylcycloheptyl (including all substituted isomers), ethyldimethylcycloheptyl (including all substituted isomers), straight-chain or branched-chain propylmethylcycloheptyl (including all substituted isomers), straight-chain or branched-chain propylethylcycloheptyl (including all substituted isomers), di-straight-chain or branched-chain propylcycloheptyl (including all substituted isomers) or straight-chain or branched-chain propylethylmethylcycloheptyl (including all substituted isomers).

The aryl group of of R¹⁸ includes phenyl or naphthyl. The alkyl aryl group includes tolyl (including all substituted isomers), xylyl (including all substituted isomers), ethylphenyl (including all substituted isomers), straight-chain or branched-chain propylphenyl (including all substituted isomers), ehtylmethylphenyl (including all substituted isomers), trimethylphenyl (including all substituted isomers), straight-chain or branched-chain butylphenyl (including all substituted isomers), straight-chain or branched-chain propylmethylphenyl (including all substituted isomers), diethylphenyl (including all substituted isomers), ethyldimethylphenyl (including all substituted isomers), tetramethylphenyl (including all substituted isomers), straight-chain or branched-chain pentylphenyl (including all substituted isomers), straight-chain or branched-chain hexylphenyl (including all substituted isomers), straight-chain or branched-chain heptylphenyl (including all substituted isomers), straight-chain or branched-chain octylphenyl (including all substituted isomers), straight-chain or branched-chain nonylphenyl (including all substituted isomers), straight-chain or branched-chain decylphenyl (including all substituted isomers), straight-chain or branched-chain undecylphenyl (including all substituted isomers) or straight-chain or branched-chain dodecylphenyl (including all substituted isomers). The aryl alkyl group includes benzyl, methylbenzyl (including all substituted isomers), dimethylbenzyl (including all substituted isomers), phenethyl, methylphenethyl (including all substituted isomers) or dimethylphenethyl (including all substituted isomers).

The k represents the value whose average value is 0 to 10.

Said R¹⁴ to R¹⁸ and k may be identical with each other in the same molecule or may be different from each other in every constituting unit.

Further, polyvinyl ethers used in the described composition also include polyvinyl ether compounds which are composed of block copolymers or random copolymers each containing the constituting unit represented by the general formula (5) and the constituting unit represented by the following general formula (6): 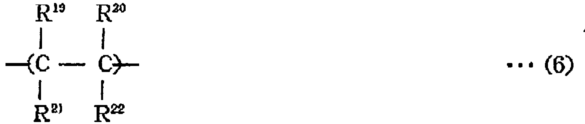 wherein R¹⁹ to R²² are each a hydrogen atom or a hydrocarbon group having 1 to 20 carbon atoms and may be identical with or different from each other, and wherein R¹⁹ to R²² may be identical with or different from each other in every constituting unit.

Said R¹⁹ to R²² are each a hydrogen atom or a hydrocarbon group having 1 to 20 carbon atoms and the hydrocarbon group having 1 to 20 carbon atoms preferably includes the same group as one exemplified in reference to the preferable group of R¹⁸ in the general formula (5).

Said R¹⁹ to R²² may be identical with each other in the same molecule or may be different from each other in every constituting unit.

As for the polyvinyl ethers used in the described composition, there is particularly no restriction with respect to polymerization degree of the constituting unit represented by the general formula (5) and of the constituting unit at need represented by the general formula (6), however, the total polymerization degree of the constituting unit represented by the general formula (5) and that represented by the general formula (6) may usually range from 1 to 200.

If the synthetic oil containing oxygen described above is jointly used, it may be incorporated into a refrigerating machine oil composition in any desired blending ratio. However, it is possible to add the synthetic oil containing oxygen in the ratio of preferably 50 parts by weight and less, more preferably 30 parts by weight and less, most preferably 20 parts by weight and less, per 100 parts by weight of the hydrocarbon oil.

The refrigerating machine oil of can be suitably used as a refrigerating machine oil for a refrigerant containing a hydrocarbon without accompaniment of an additive. However, it is also possible to use in the form of a refrigerating machine oil composition containing therein any of various additives as required.

In particular, it is possible to blend at least one kind of a phosphorus compound selected from the group consisting of phosphoric esters, acidic phosphoric esters, amine salt of acidic phosphoric esters, chlorinated phosphoric esters and phosphorous esters in view of improving the refrigerating apparatus in wear resistance and load resistance by the use of the refrigerating machine oil composition.

These phosphorus compounds are esters obtained by a reaction between phosphoric acid or phosphorous acid and an alkanol or polyether type alcohol, and are also derivatives of said esters.

Examples of phosphoric esters are tributyl phosphate, tripentyl phosphate, trihexyl phosphate, triheptyl phosphate, trioctyl phosphate, trinonyl phosphate, tridecyl phosphate, triundecyl phosphate, tridodecyl phosphate, tritridecyl phosphate, tritetradecyl phosphate, tripentadecyl phosphate, trihexadecyl phosphate, triheptadecyl phosphate, trioctadecyl phosphate, trioleyl phosphate, triphenyl phosphate, tricresyl phosphate, trixylyl phosphate, cresyldiphenyl phosphate and xylyldiphenyl phosphate.

Examples of acidic phosphoric esters are monobutyl acid phosphate, monopentyl acid phosphate, monohexyl acid phosphate, monoheptyl acid phosphate, monooctyl acid phosphate, monononyl acid phosphate, monodecyl acid phosphate, monoundecyl acid phosphate, monododecyl acid phosphate, monotridecyl acid phosphate, monotetradecyl acid phosphate, monopentadecyl acid phosphate, monohexadecyl acid phosphate, monoheptadecyl acid phosphate, monooctadecyl acid phosphate, monooleyl acid phosphate, dibutyl acid phosphate, dipentyl acid phosphate, dihexyl acid phosphate, diheptyl acid phosphate, dioctyl acid phosphate, dinonyl acid phosphate, didecyl acid phosphate, diundecyl acid phosphate, didodecyl acid phosphate, ditridecyl acid phosphate, ditetradecyl acid phosphate, dipentadecyl acid phosphate, dioctadecyl acid phosphate and dioleyl acid phosphate.

Examples of amine salts of acidic phosphoric esters are methylamine, ethylamine, propylamine, butylamine, pentylamine, hexylamine, heptylamine, octylamine, dimethylamine, diethylamine, dipropylamine, dibutylamine, dipentylamine, dihexylamine, diheptylamine, dioctylamine, trimethylamine, triethylamine, tripropylamine, tributylamine, tripentylamine, trihexylamine, triheptylamine and trioctylamine of the acidic phosphoric ester.

Examples of chlorinated phosphoric esters are tris-dichloropropyl phosphate, tris-chloroethyl phosphate, tris-chlorophenyl phosphate and polyoxyalkylene bis[di(chloroalkyl)] phosphate. Examples of phosphorous esters are dibutyl phosphite, dipentyl phosphite, dihexyl phosphite, diheptyl phosphite, dioctyl phosphite, dinonyl phosphite, didecyl phosphite, diundecyl phosphite, didodecyl phosphite, dioleyl phosphite, diphenyl phosphite, dicresyl phosphite, tributyl phosphite, tripentyl phosphite, trihexyl phosphite, triheptyl phosphite, trioctyl phosphite, trinonyl phosphite, tridecyl phosphite, triundecyl phosphite, tridodecyl phosphite, trioleyl phosphite, triphenyl phosphite and tricresyl phosphite. It is also possible to use a mixture of these compounds.

These phosphorus compounds may be incorporated in the refrigerating machine oil composition of in any desired blending ratio. However, it is generally preferable to incorporate therein these phosphorus compounds in the ratio of from 0.01 to 5.0 mass %, more preferably from 0.02 to 3.0 mass %, most preferably 0.03 to 1.0 mass %, based on the total amount of the refrigerating machine oil composition (based on the total amount of the base oil and the whole additives). When the phosphorus compounds are incorporated in the refrigerating machine oil composition in too small blending ratio, there are a few cases where they do not improve the refrigerating apparatus in wear resistance and load resistance. On the other hand when the phosphorus compounds are incorporated in too large blending ratio, they cause sludge. According to this invention, even if the phosphorus compounds are incorporated in small blending ratio, they can sufficiently improve the refrigerating apparatus in wear resistance and load resistance as compared with the case where only an HFC refrigerant has been used in a refrigerating system hitherto. It is of course possible, if required, to use at least two kinds of the phosphorus compounds jointly in the refrigerating machine oil composition.

It is also possible to incorporate in the refrigerating machine oil composition of this disclosure at least one kind of an epoxy compound selected from the group consisting of:
(1) Phenylglycidyl ether type epoxy compounds,
(2) Alkylglycidyl ether type epoxy compounds,
(3) Glycidyl ester type epoxy compounds,
(4) Aryl oxirane compounds,
(5) Alkyl oxirane compounds,
(6) Alicyclic epoxy compounds,
(7) Epoxidized fatty monoesters,
(8) Epoxidized vegetable oils.

Examples of phenylglycidyl ether type epoxy compounds (1) are phenylglycidyl ether and alkylphenylglycidyl ether. The alkylphenylglycidyl ether used herein may be one having 1 to 3 alkyl groups each containing 1 to 13 carbon atoms, preferably one having one alkyl group containing 4 to 10 carbon atoms. Examples of such preferable alkylphenylglycidyl ethers are n-butylphenylglycidyl ether, i-butylphenylglycidyl ether, sec-butylphenylglycidyl ether, tert-butylphenylglycidyl ether, pentylphenylglycidyl ether, hexylphenylglycidyl ether, heptylphenylglycidyl ether, octylphenylglycidyl ether, nonylphenylglycidyl ether and decylphenylglycidyl ether.

Examples of alkylglycidyl ether type epoxy compounds (2) are decylglycidyl ether, undecylglycidyl ether, dodecylglycidyl ether, tridecylglycidyl ether, tetradecylglycidyl ether, 2-ethylhexylglycidyl ether, neopentylglycoldiglycidyl ether, trimethylolpropane triglycidyl ether, pentaerythritol tetraglycidyl ether, 1,6-hexadiol diglycidyl ether, sorbitol polyglycidyl ether, polyalkyleneglycol monoglycidyl ether and polyalkyleneglycol diglycidyl ether.

Examples of glycidyl ester type epoxy compounds (3) are phenylglycidyl ester, alkylglycidyl ester and alkenylglycidyl ester. Preferable examples thereof are glycidyl 2,2-dimethyloctanoate, glycidyl benzoate, glycidyl acrylate and glycidyl methacrylate.

Examples of aryl oxirane compounds (4) are 1,2-epoxystyrene and alkyl-1,2-epoxystyrene.

Examples of alkyl oxirane compounds (5) are 1,2-epoxybutane, 1,2-epoxypentane, 1,2-epoxyhexane, 1,2-epoxyheptane, 1,2-epoxyoctane, 1,2-epoxynonane, 1,2-epoxydecane, 1,2-epoxyundecane, 1,2-epoxydodecane, 1,2-epoxytridecane, 1,2-epoxytetradecane, 1,2-epoxypentadecane, 1,2-epoxyhexadecane, 1,2-epoxyheptadecane, 1,2-epoxyoctadecane, 1,2-epoxynonadecane and 1,2-epoxyeicosane.

Examples of alicyclic epoxy compounds (6) are 1,2-epoxycyclohexane, 1,2-epoxycyclopentane, 3,4-epoxycyclohexylmethyl-3,4-epoxycyclohexane carboxylate, bis(3,4-epoxycyclohexylmethyl) adipate, exo-2,3-epoxynorbornane, bis(3,4-epoxy-6-methylcyclohexylmethyl) adipate, 2-(7-oxabicyclo[4.1.0]hept-3-yl)-spiro(1,3-dioxane-5,3'-[7]oxabicyclo[4.1.0]) heptane, 4-(1'-methylepoxyethyl)-1,2-epoxy-2-methylcyclohexane and 4-epoxyethyl-1,2-epoxycyclohexane.

Examples of epoxidized fatty monoesters (7) are an ester formed by reacting an epoxidized fatty acid having 12 to 20 carbon atoms with an alcohol having 1 to 8 carbon atoms, phenol or an alkylphenol. In particular, epoxystearates such as butyl, hexyl, benzyl, cyclohexyl, methoxyethyl, phenyl and butylphenyl esters of epoxystearic acid are preferred.

Examples of epoxidized vegetable oils (8) are epoxy compounds of a vegetable oil such as soybean oil, linseed oil or cottonseed oil.

Among these epoxy compounds, the more preferred ones are phenylglycidyl ether type epoxy compounds, glycidyl ester type epoxy compounds, alicyclic epoxy compounds and epoxidized fatty monoester are preferred. Among them, phenylglycidyl ether type epoxy compounds and glycidyl ester type epoxy compounds with phenylglycidyl ether, butylphenylglycidyl ether and alkylglycidyl esters being the most preferred.

These epoxy compounds may be incorporated in the refrigerating machine oil composition of the disclosure in any desired blending ratio. However, it is generally preferable to incorporate therein these epoxy compounds in the ratio of from 0.1 to 5.0 mass %, more preferably from 0.2 to 2.0 mass %, based on the total amount of the refrigerating machine oil composition (based on the total amount of the base oil and the whole additives). It is of course possible to employ at least two kinds of these epoxy compounds jointly.

When the epoxy compounds are added to the refrigerating machine oil composition, they can capture moisture contained in the refrigerating machine oil composition and in the refrigerant. When a hygroscopic HFC refrigerant is used in a refrigerating system and a synthetic oil containing oxygen which is compatible with the HFC refrigerant is used as a refrigerating machine oil, in order to decrease the water content in the refrigerating system the epoxy compounds have been used as essential additives.
However, according to this disclosure there is used as a refrigerant a hydrocarbon having a lower hygroscopicity than that of the HFC refrigerant so that the water content in the refrigerating system is sufficiently small, therefore the epoxy compounds are not essential additives. On the other hand, when the phosphorus compounds and the epoxy compounds are used jointly in the oil composition, the deteriorated compounds produced by the deterioration of the phosphorus compounds in the refrigerating system are likely to react with the epoxy compounds to produce sludge, therefore it is preferable not to add the epoxy compounds in order to prevent the generation of sludge.

It is also possible, if required, to use singly or jointly suitable conventional additives in the refrigerating machine oil composition for the purpose of improving the properties of the oil composition of this disclosure. The suitable additives include, anti-oxidants of a phenol type such as di-tert-butyl-p-cresol and bisphenol A or of an amine type such as phenyl-α-naphthyl amine and N,N-di(2-naphthyl)-p-phenylenediamine; anti-wear additives such as zinc dithiophosphate; extreme pressure agents such as chlorinated paraffin and sulfur compounds; an oiliness improvers such as a fatty acid; antifoaming agents such as silicone-type ones; metal inactivators such as benzotriazole; viscosity index improvers; pour point depressants; and detergent-dispersants.

These additives can generally be added in the ratio of 10 mass % and less, preferably 5 mass % and less, based on the total amount of the refrigerating machine oil composition (based on the total amount of the base oil and the whole additives).

The hydrocarbon refrigerants used in the refrigerating machine together with the refrigerating machine oil composition (a lubricating oil for the refrigerating machine) of this disclosure, include specifically, alkane, cycloalkane, alkene and a mixture of them, each having 1 to 6 carbon atoms, preferably 1 to 5 carbon atoms, more preferably 2 to 4 carbon atoms. More specifically, the hydrocarbon refrigerants include methane, ethylene, ethane, propylene, propane, cyclopropane, butane, isobutane, cyclobutane, methylcyclopropane and a mixture of at least two kinds of them. Among them, propane, butane, isobutane or a mixture of them is preferable.

The refrigerating machine oil composition according to this disclosure is generally present in a refrigerating machine in the form of a fluid composition in which the refrigerating machine oil composition is mixed with the refrigerant containing the hydrocarbon as mentioned above. The mixing ratio of the refrigerating machine oil composition to the refrigerant in this fluid composition is 1 to 500 parts by weight, of the refrigerating machine oil composition, preferably 2 to 400 parts by weight, of the refrigerating machine oil composition per 100 parts by weight of the refrigerant.

Since the refrigerating machine oil composition is excellent in electric properties and low in hygroscopicity, it is particularly suited for use in an air conditioner or a refrigerator provided with a sealed compressor of a reciprocating type or rotary type. This refrigerating machine oil composition is also suited for use in an air conditioner or dehumidifier for vehicles, a freezer, a refrigerating chamber, an automatic vending machine, a show-case or a cooling system for a chemical plant. This refrigerating machine oil composition is also applicable to a compressor of a centrifugal type.

### Examples 1 to 33 and Comparative Examples 1 to 6

This invention will be further explained with reference to the following Examples and Comparative Examples. However, it should be noted that these examples are not intended to restrict in any manner the scope of this invention.

### Examples 1, 12 and 23 are not examples of the claimed invention.

The base oils used in these Examples and Comparative Examples are shown in Table 1.

Using the base oils (refrigerating machine oils) shown in Table 1. the refrigerating machine oil compositions of the present invention and comparative ones were prepared, and the oil compositions thus obtained were each subjected to the following tests.

### (Compatibility Tests)

In conformity with JIS K 2211 4.12, the tests were conducted by incorporating 2.5 g of each of the sample oils (refrigerating machine oils) into 22.5 g of a refrigerant, both of which are shown in Tables 2 to 4 (oil content: 10 %), to see if the refrigerant and the sample oil would dissolve in each other, or if they would be separated from each other or turned into a white-turbid liquid, thereby to measure the lower limit value (two-phase separation temperature) where the refrigerant and the sample oil start to be insoluble in each other. These results are also shown in Tables 2 to 4.

### (Evaluation Tests for lubricity)

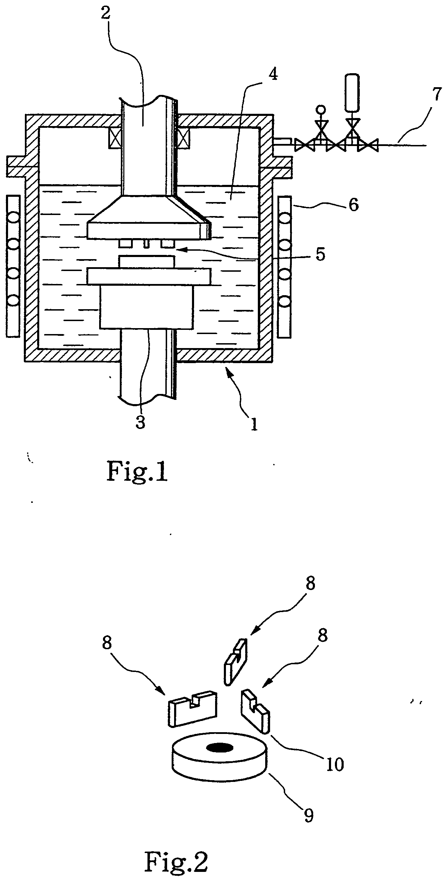

With the abrasion tester in an atmosphere of a refrigerant shown in Fig. 1. the fluid compositions for the refrigerating machine which are shown in Tables 5 to 7 were subjected to a friction test under the conditions of test temperature of 110 °C, test period of one hour and test load of 0.96 kN, wherein the cast iron discs and tool steel vanes were used, to measure the wear width of the center of each of three vanes after the end of the test, averaging these values of wear width, These results are also shown in Tables 5 to 7.

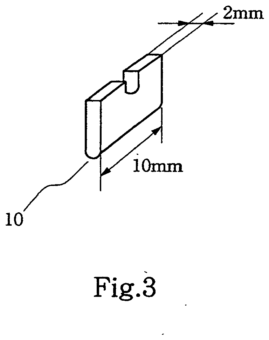

In Fig. 1, the numeral 1 represents a pressure vessel; 2, a rotating shaft; 3, a fixed shaft (load); 4, atmosphere of a refrigerating machine oil compositions and a refrigerant; 5, test pieces; 6, a heater; 7, a vacuum line. Fig. 2 is a magnified view of the test pieces and the number 8 shows vanes, 9 shows a disc and 10 shows 4R. Fig. 3 is a magnified view of a vane and the term "4R" indicates that the opposite side of the dented side is a curved surface which has a radius of 4 mm.

**Table 1**

| Refrigerating machine oil | | Kinematic viscosity (mm²/s) | | Molecular Wt. distribution (mass %) | | | |
|---|---|---|---|---|---|---|---|
| | | 40°C | 100°C | <200 | 200-300 | 301-350 | >350 |
| A | Naphthenic mineral oil | 32.5 | 4.71 | ------ | | | |
| B | Poly α-olefin | 15.0 | 3. 91 | Number-average Mol. Wt. 420 | | | |
| C | Alkylbenzene (branched chain type) | 8.3 | 2.10 | 5 | 93 | 2 | 0 |
| D | Alkylbenzene (branched chain type) | 12.7 | 2.62 | 0 | 83 | 15 | 2 |
| E | Alkylbenzene (branched chain type) | 29.0 | 4.30 | 2 | 49 | 24 | 25 |
| F | Alkylbenzene (branched chain type) | 35.2 | 4.52 | 2 | 38 | 35 | 25 |
| G | Alkylbenzene (straight chain type) | 15.4 | 3.18 | 0 | 61 | 30 | 9 |
| H | Alkylbenzene (straight chain type) | 25.6 | 4.33 | 1 | 45 | 43 | 11 |
| I | Tetraester (pentaerythritol/2-ethylhexanoic acid) | 45.1 | 6. 28 | ------ | | | |
| J | Polypropylene glycol monobutyl other | 32.5 | 6.71 | Number-average Mol. Wt. 690 | | | |
| K | A + Tricresyl phosphate | 32.0 | 4.69 | ------ | | | |
| L | C + Tricresyl phosphate | 8.3 | 2.10 | ------ | | | |
| M | E + Tricresyl phosphate | 28.5 | 4.28 | ------ | | | |

| | | | | | | | |
|---|---|---|---|---|---|---|---|
| (NOTES) B: 1-decene oligomer C, D, E, F: These oils were each produced by distilling a mixture of monoalkylbenzenes and dialkylbenzenes which had been prepared from, as raw materials, benzene and branched-chain olefins consisting of propylene dimers to octamers and having 6 to 24 carbon atoms, by reacting them in the presence of hydrofluoric acid as an alkylating catalyst. G, H: These oils were produced by distilling a mixture of monoalkylbenzenes and dialkylbenzenes which had been prepared from, as raw materials, benzene and products obtained by transforming n-paraffin having 9 to 18 carbon atoms separated from a kerosene fraction into an olefin with a catalyst, by reacting them in the presence of a hydrofluoric acid catalyst. K, L, M: The contents of tricresyl phosphate in these oils are all 1 mass % based on the total amount of the refrigerating machine oils. | | | | | | | |

**Table 2**

| | Refrigerating machine, oil | Refrigerant (mass %) | Two-phase separation temp. (°C) |
|---|---|---|---|
| Example | | | |
| 1 | A | propane=100 | <30 |
| 2 | B | propane=100 | <30 |
| 3 | C | propane=100 | <30 |
| 4 | D | propane=100 | <30 |
| 5 | E | propane=100 | <30 |
| 6 | F | propane=100 | <30 |
| 7 | G | propane=100 | <30 |
| 8 | H | propane=100 | <30 |
| 9 | K | propane=100 | <30 |
| 10 | L | propane=100 | <30 |
| 11 | M | propane=100 | <30 |
| Comp. Ex. | | | |
| 1 | I | propane=100 | <30 |
| 2 | J | propane=100 | <30 |

| | | | |
|---|---|---|---|
| Note: blending ratio of a refrigerating machine oil to a refrigerant: a refrigerating machine oil 10 mass % /a refrigerant 90 mass %. | | | |

**Table 3**

| | Refrigerating machine oil | Refrigerant (mass %) | Two-phase separation temp. (°C) |
|---|---|---|---|
| Example | | | |
| 12 | A | n-butane=100 | <30 |
| 13 | B | n-butane=100 | <30 |
| 14 | C | n-butane=100 | <30 |
| 15 | D | n-butane=100 | <30 |
| 16 | E | n-butane=100 | <30 |
| 17 | F | n-butane=100 | <30 |
| 18 | G | n-butane=100 | <30 |
| 19 | H | n-batane=100 | <30 |
| 20 | K | n-butane=100 | <30 |
| 21 | L | n-butane=100 | <30 |
| 22 | M | n-butane=100 | <30 |
| Comp. Ex. | | | |
| 3 | I | n-butane=100 | <30 |
| 4 | J | n-butane=100 | <30 |

| | | | |
|---|---|---|---|
| Note: blending ratio of a refrigerating machine oil to a refrigerant: a refrigerating machine oil 10 mass % /a refrigerant 90 mass %. | | | |

**Table 4**

| | Refrigerating machine oil | Refrigerant (mass %) | Two-phase separation temp. (°C) |
|---|---|---|---|
| Example | | | |
| 23 | A | i-butane=100 | <30 |
| 24 | B | i-butane=100 | <30 |
| 25 | C | i-butane=100 | <30 |
| 26 | D | i-butane=100 | <30 |
| 27 | E | i-butane=100 | <30 |
| 28 | F | i-butane=100 | <30 |
| 29 | G | i-butane=100 | <30 |
| 30 | H | i-butane=100 | <30 |
| 31 | K | i-butane=100 | <30 |
| 32 | L | i-butane=100 | <30 |
| 33 | M | i-butane=100 | <30 |
| Comp. Ex. | | | |
| 5 | I | i-butane=100 | <30 |
| 6 | J | i-butane=100 | <30 |

| | | | |
|---|---|---|---|
| Note: blending ratio of a refrigerating machine oil to a refrigerant: a refrigerating machine oil 10 mass % /a refrigerant 90 mass %. | | | |

**Table 5**

| | Refrigerating machine oil | Refrigerant (mass %) | Wear width *µ*m |
|---|---|---|---|
| Example | | | |
| 1 | A | propane=100 | 160 |
| 2 | B | propane=100 | 150 |
| 3 | C | propane=100 | 170 |
| 4 | D | propane=100 | 150 |
| 5 | E | propane=100 | 160 |
| 6 | F | propane=100 | 140 |
| 7 | G | propane=100 | 150 |
| 8 | H | propane=100 | 150 |
| 9 | K | propane=100 | 80 |
| 10 | L | propane=100 | 90 |
| 11 | M | propane=100 | 80 |
| Comp. Ex. | | | |
| 1 | I | propane=100 | 460 |
| 2 | J | propane=100 | 440 |

| | | | |
|---|---|---|---|
| Note: blending ratio of a refrigerating machine oil to a refrigerant: a refrigerating machine oil 70 mass % /a refrigerant 30 mass %. | | | |

**Table 6**

| | Refrigerating machine oil | Refrigerant (mass %) | Wear width *µ*m |
|---|---|---|---|
| Example | | | |
| 12 | A | n-butane=100 | 150 |
| 13 | B | n-butane=100 | 160 |
| 14 | C | n-butane=100 | 150 |
| 15 | D | n-butane=100 | 160 |
| 16 | E | n-butane=100 | 150 |
| 17 | F | n-butane=100 | 170 |
| 18 | G | n-butane=100 | 150 |
| 19 | H | n-butane=100 | 160 |
| 20 | K | n-butane=100 | 70 |
| 21 | L | n-butane=100 | 90 |
| 22 | M | n-butane=100 | 80 |
| comp. Ex. | | | |
| 3 | I | n-batane=100 | 440 |
| 4 | J | n-butane=100 | 430 |

| | | | |
|---|---|---|---|
| Note: blending ratio of a refrigerating machine oil to a refrigerant: a refrigerating machine oil 70 mass % /a refrigerant 30 mass %. | | | |

**Table 7**

| | Refrigerating machine oil | Refrigerant (mass %) | Wear width *µ*m |
|---|---|---|---|
| Example | | | |
| 23 | A | i-butane=100 | 160 |
| 24 | B | i-butane=100 | 170 |
| 25 | C | i-butane=100 | 170 |
| 26 | D | i-butane=100 | 150 |
| 27 | E | i-butane=100 | 160 |
| 28 | F | i-butane=100 | 160 |
| 29 | G | i-butane=100 | 170 |
| 30 | H | i-butane=100 | 150 |
| 31 | K | i-butane=100 | 90 |
| 32 | L | i-butane=100 | 100 |
| 33 | M | i-butane=100 | 80 |
| Comp. Ex. | | | |
| 5 | I | i-butane=100 | 460 |
| 6 | J | i-butane=100 | 450 |

| | | | |
|---|---|---|---|
| Note: blending ratio of a refrigerating machine oil to a refrigerant: a refrigerating machine oil 70 mass % /a refrigerant 30 mass %. | | | |

### Industrial Applicability

As mentioned above, the refrigerating machine oil composition of this invention has better compatibility with a refrigerant containing a hydrocarbon than that with an HFC refrigerant, and the fluid composition for a refrigerating machine of this invention comprising the afore-mentioned refrigerant which contains the hydrocarbon and the afore-mentioned refrigerating machine oil composition has an excellent lubricity compared with a fluid composition which does not contain a hydrocarbon oil.

## Claims

1. A fluid composition for use in a refrigerating machine, which comprises:
(I) a refrigerant consisting of a hydrocarbon having 1 to 6 carbon atoms; and
(II) a refrigerating machine oil composition which comprises a base oil comprising a hydrocarbon oil selected from the group consisting of olefin polymers, naphthalene compounds and alkylbenzene oils having a kinematic viscosity at 40°C of 4 to 50 mm²/s and a kinematic viscosity at 100°C of 2 to 10 mm²/s, wherein said alkylbenzene oils contain at least 60 mass% of alkylbenzene components having a molecular weight of 200 to 350 and contain 40 mass% or less of alkylbenzene components having a molecular weight of less than 200 or more than 350,
wherein said refrigerant (I) and said hydrocarbon refrigerating machine oil composition (II) are mixed in the ratio of 1 to 500 parts by weight of the composition (II) per 100 parts by weight of the refrigerant (I).

2. The fluid composition for use in a refrigerating machine according to claim 1, wherein said hydrocarbon refrigerating machine oil composition (II) further comprises a synthetic oil containing oxygen in the ratio of 50 parts by weight or less per 100 parts by weight of said hydrocarbon oil.

3. The fluid composition for use in a refrigerating machine according to claim 1, wherein said hydrocarbon refrigerating machine oil composition further comprises a phosphorus compound.

## Patentansprüche

1. Eine Flüssig-Zusammensetzung für die Verwendung in einer Kältemaschine, welche Folgendes umfasst:
(I) ein Kältemittel bestehend aus einem Kohlenwasserstoff mit 1 bis 6 Kohlenstoffatomen; und
(II) eine Kältemaschinenölzusammensetzung, welche ein Basisöl umfasst umfassend ein Kohlenwasserstofföl gewählt aus der Gruppe bestehend aus Olefinpolymeren, Naphthalenverbindungen und Alkylbenzenölen mit einer kinematischen Viskosität bei 40°C von 4 bis 50 mm²/s und einer kinematischen Viskosität bei 100°C von 2 bis 10 mm²/s, worin die Alkylbenzenöle mindestens 60 Masseprozent von Alkylbenzenkomponenten enthalten, die ein Molekulargewicht von 200 bis 350 haben, und 40 Masseprozent oder weniger von Alkylbenzenkomponenten enthalten, die ein Molekulargewicht von weniger als 200 oder mehr als 350 haben,
worin das Kältemittel (I) und die Kohlenwasserstoffkältemaschinenölzusammensetzung (II) in dem Verhältnis von 1 bis 500 Gewichtsteile der Zusammensetzung (II) pro 100 Gewichtsteile des Kältemittels (I) gemischt werden.

2. Die Flüssig-Zusammensetzung für die Verwendung in einer Kältemaschine gemäß Anspruch 1, worin die Kohlenwasserstoffkältemaschinenölzusammensetzung (II) weiter ein synthetisches Öl umfasst, enthaltend Sauerstoff in dem Verhältnis von 50 Gewichtsteilen oder weniger pro 100 Gewichtsteile des Kohlenwasserstofföls.

3. Die Flüssig-Zusammensetzung für die Verwendung in einer Kältemaschine gemäß Anspruch 1, worin die Kohlenwasserstoffkältemaschinenölzusammensetzung weiter eine Phosporverbindung umfasst.

## Revendications

1. Composition de fluide pour utilisation dans un appareil de réfrigération, qui comprend :
I) un agent réfrigérant constitué d'un hydrocarbure comportant de 1 à 6 atomes de carbone,
II) et une composition d'huile pour appareil de réfrigération, comportant une huile de base qui comprend une huile d'hydrocarbures, choisie dans l'ensemble constitué par les polymères d'oléfine(s), les composés naphtaléniques et les huiles d'alkyl-benzènes, et qui présente une viscosité cinématique de 4 à 50 mm²/s à 40 °C et de 2 à 10 mm²/s à 100 °C, étant entendu que lesdites huiles d'alkyl-benzènes contiennent au moins 60 % en masse de composants de type alkyl-benzène présentant une masse molaire de 200 à 350 et au plus 40 % en masse de composants de type alkyl-benzène présentant une masse molaire inférieure à 200 ou supérieure à 350,
et dans laquelle ledit agent réfrigérant (I) et ladite composition (II) d'huile d'hydrocarbures pour appareil de réfrigération sont mélangés en une proportion de 1 à 500 parties en poids de la composition (II) pour 100 parties en poids de l'agent réfrigérant (I).

2. Composition de fluide pour utilisation dans un appareil de réfrigération, conforme à la revendication 1, dans laquelle ladite composition (II) d'huile d'hydrocarbures pour appareil de réfrigération comprend en outre une huile synthétique oxygénée, en une proportion d'au plus 50 parties en poids pour 100 parties en poids de ladite huile d'hydrocarbures.

3. Composition de fluide pour utilisation dans un appareil de réfrigération, conforme à la revendication 1, dans laquelle ladite composition (II) d'huile d'hydrocarbures pour appareil de réfrigération comprend en outre un composé phosphoré.
